# FASCICULE DE BREVET EUROPEEN

(11) **EP 1 969 819 B1**
(45) Date de publication et mention de la délivrance du brevet: **28.03.2012**
(21) Numéro de dépôt: 06847170.5
(22) Date de dépôt: 19.12.2006
(51) Int. Cl.: H04L 12/66, H04L 29/08

(54) **Configuration automatique d'interfaces dans un equipement d'interconnexion entre au moins une plateforme de services et au moins un terminal utilisateur**
Automatische Konfiguration von Schnittstellen in Geräten zur Verbindung mindestens einer Dienstplattform und mindestens eines Benutzerendgeräts
Automatic configuration of interfaces in equipment for interconnecting at least one service platform and at least one user terminal

(30) Priorité: 20.12.2005 FR 0553980
(43) Date de publication de la demande: 17.09.2008
(73) Titulaire: FRANCE TELECOM, 75015 Paris (FR)
(72) Inventeur: LE GOFF, Gwenaël, F-22300 Lannion (FR); CADIOU, Jean-François, F-22560 Trebeurden (FR); LE BAIL, François-Xavier, F-22300 Lannion (FR)
(86) Numéro de dépôt international: PCT/FR2006/051380
(87) Numéro de publication internationale: WO 2007/071877

(56) Documents cités:
- UNKNOWN: "ebtables/iptables interaction on a Linux based bridge" UNKNOWN, [Online] 8 juillet 2002 (2002-07-08), pages 1-7, XP002400168 inet Extrait de l'Internet: URL:http://users.pandora.be/bart.de.schuym er/ebtables/tmp/br_fw_ia.html> [extrait le 2006-09-22]

## Description

La présente invention concerne de manière générale un procédé de configuration automatique d'un équipement d'interconnexion entre au moins une plateforme de services et au moins un terminal, ledit équipement d'interconnexion comportant une interface de service vers ladite plateforme de service et une interface de terminal vers ledit terminal.

Un exemple connu d'un tel équipement d'interconnexion est une passerelle domestique. Un tel équipement permet de connecter un réseau domestique ou un réseau local avec le réseau d'un opérateur en télécommunications, via un réseau d'accès à support filaire ou radio.

L'équipement d'interconnexion a pour fonction d'acheminer un flux de service reçu en provenance de la plateforme de services vers l'interface de terminal connectée au terminal qui a requis le service.

A chaque connexion d'un nouveau terminal sur une interface de terminal donnée, l'équipement d'interconnexion doit être configuré afin d'être en mesure d'acheminer un flux de service vers cette interface de terminal.

il est connu de faire cette configuration au moyen d'une interface utilisateur d'un serveur de configuration interne de l'équipement d'interconnexion. Cette configuration nécessite l'intervention d'une personne, technicien ou usager, équipée d'un terminal permettant d'accéder à l'interface de configuration de l'équipement d'interconnexion.

Cette méthode de configuration présente plusieurs inconvénients parmi lesquels celui d'être manuelle. Elle implique d'utiliser un terminal permettant d'accéder à l'interface utilisateur du serveur de configuration interne de l'équipement d'interconnexion, ce qui a pour conséquence d'empêcher l'accès à certains services à des personnes ne possédant pas ce terminal. De plus, la configuration de l'équipement d'interconnexion peut s'avérer complexe lorsqu'elle est pratiquée par une personne non initiée et par conséquent, engendrer des erreurs.

L'invention a notamment pour but de proposer un procédé de configuration d'un équipement d'interconnexion conforme à la revendication 1 et qui ne présente pas ces inconvénient.

Un tel procédé de configuration permet d'éviter des erreurs de configuration car chaque terminal connecté à l'équipement d'interconnexion est clairement identifié, ainsi que le service qu'il demande et ce quelque soit l'interface sur laquelle ledit terminal est connecté.

Selon une première variante de réalisation de la présente invention, en l'absence de réception de ladite trame en provenance d'un terminal, il est considéré que le service demandé par ledit terminal est un service par défaut prédéfini au niveau de l'équipement d'interconnexion.

Cette variante permet de fournir le service par défaut à un terminal qui ne serait pas prévu pour transmettre une trame permettant d'identifier le service qu'il requiert.

Selon une autre variante de réalisation de la présente invention, ladite trame est une trame DHCP.

Ces trames de données étant rarement émises, leur analyse demande peu de ressource au processeur de l'équipement d'interconnexion. De plus, ces trames de données se prêtent particulièrement bien à la mise en oeuvre du procédé de configuration selon l'invention car elles contiennent les informations nécessaires à l'exécution dudit procédé selon l'invention de par les informations qu'elles contiennent.

Dans ce mode de réalisation, les informations d'identification dudit service sont contenues dans au moins l'un des champs 60 et 77 de ladite trame DHCP.

Dans un autre mode de réalisation particulier, le procédé selon l'invention comporte une étape d'extraction d'informations relatives au terminal, contenues dans ladite trame de données, une étape de comparaison desdites informations relatives au terminal avec d'autres informations relatives audit terminal contenues dans un fichier de persistance de l'équipement d'interconnexion, le lien entre la première interface et la deuxième interface n'étant créé que si les informations relatives au terminal contenues dans le fichier de persistance sont compatibles avec les informations relatives au terminal extraites de ladite trame.

Ceci permet par exemple à un opérateur en télécommunication d'avoir un contrôle sur les terminaux connectés à l'équipement d'interconnexion en excluant certains modèles de terminaux.

L'invention concerne également un équipement d'interconnexion conforme à la revendication 5.

Dans un mode de réalisation particulier, l'équipement d'interconnexion comporte au moins un routeur et au moins un pont.

Ce mode de réalisation permet aux terminaux de recevoir simultanément des services acheminés par routage et des services acheminés au moyen dé ponts, élargissant ainsi, la gamme de services proposés.

"Ebtables/igtables interaction on a linux based bridge" divulgue un "brouter" ayant une configuration non automatique.

D'autres caractéristiques et avantages apparaîtront à la lecture de modes de réalisation préférée décrits en référence aux dessins dans lesquels
- la figure 1 représente schématiquement la structure interne générale d'un équipement d'interconnexion entre au moins une plateforme de service et au moins un terminal selon l'invention,
- la figure 2 représente un premier mode de réalisation d'un équipement d'interconnexion selon l'invention,
- la figure 3 représente un deuxième mode de réalisation d'un equipement d'interconnexion selon l'invention,
- la figure 4 représente l'organigramme général d'un procédé de configuration automatique d'un équipement d'interconnexion selon l'invention,
- la figure 5 représente les différentes étapes d'un premier module constitutif du procédé selon l'invention,
- la figure 6 représente les différentes étapes d'un deuxième module constitutif du procédé selon l'invention;
- la figure 7 représente les différentes étapes d'un troisième module constitutif du procédé selon l'invention.

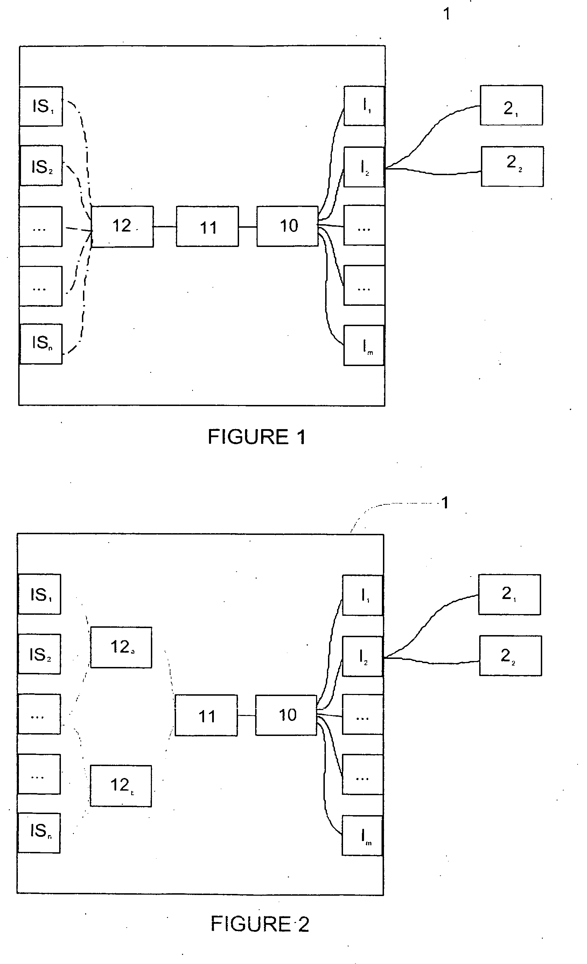

Le fonctionnement interne d'un équipement d'interconnexion 1 entre au moins une plateforme de services et au moins un terminal utilisateur 2ₖ pour acheminer un flux de service entre une interface de service ISj (j ∈ 1, ..., n) dudit équipement d'interconnexion 1 et une interface de terminal li (i ∈ 1, ..., m) dudit équipement d'interconnexion 1, dans lequel l'invention est mise en oeuvre est décrit en référence à la figure 1. La plateforme de services, non représentée sur la figure, est localisée à distance dans le réseau d'un opérateur en télécommunications souhaitant mettre des flux de services à disposition.

L'équipement d'interconnexion 1 tel que représenté à la figure 1 comporte, en son sein, une première série d'interfaces dites interfaces de terminal I₁ à Iₘ, au moins un module d'analyse de trames de données 10, au moins un module de commande 11, au moins un module d'acheminement 12 et une deuxième série d'interfaces IS₁ à ISₙ, dites interfaces de services.

Lorsque qu'un terminal utilisateur 2k est connecté à l'équipement d'interconnexion 1 au moyen d'une interface de terminal li (i ∈ 1, ..., m), le terminal utilisateur 2ₖ émet des requêtes se présentant sous la forme de trames de données en direction des plateformes de services afin de récupérer des flux de services. Ces trames contiennent des champs dont les valeurs indiquent quel type de flux de service le terminal utilisateur 2ₖ est apte à recevoir, par exemple parmi l'un des services suivants : visiophonie, Internet, télévision numérique, etc... Les interfaces de terminal I₁ à Iₘ auxquelles sont connectés les différents terminaux utilisateur 2ₖ sont, par exemple, des ports USB, des ports Ethernet, des ports WIFI, ou des ports Bluetooth. Il est à noter qu'une interface de terminal I₁ à Iₘ peut être connectée à une pluralité de terminaux utilisateurs 2ₖ. Ainsi, sur la figure 1, l'interface de terminal I2 est connectée à deux terminaux utilisateurs 21 et 22. Selon l'invention, les différents terminaux connectés à ladite interface de terminal demandent tous à recevoir le même flux de service.

Néanmoins, différents terminaux connectés à une même interface de terminal Iᵢ peuvent demander à recevoir chacun un flux de service différent à condition de ne pas fonctionner simultanément.

Les trames de données émises par les différents terminaux utilisateur 2ₖ sont interceptées en sortie des interfaces de terminal I₁ à Iₘ par au moins un module d'analyse de trames 10. Ce module a pour fonction d'extraire les valeurs de certains champs contenus dans certaines de ces trames. Ces champs renseignent, entre autre, comme il a été dit plus haut sur la nature du flux de service demandé par chaque terminal utilisateur 2ₖ connecté, ainsi que sur le terminal utilisateur lui-même en fournissant des informations comme par exemple son adresse physique, telle qu'une adresse MAC, @MAC2ₖ. Une fois ces informations extraites, les trames de données sont envoyées dans le réseau à destination des plateformes de services. Les informations issues de l'analyse des trames de données sont mémorisées dans au moins un premier fichier de persistance de l'équipement d'interconnexion 1, dit fichier « Terminaux ».

Les flux de services demandés par les terminaux utilisateurs 2ₖ connectés à un équipement d'interconnexion 1 arrivent dans l'équipement d'interconnexion 1 par un modem par exemple (non représenté sur les figures). Ils sont répartis alors vers différentes interfaces de services ISj (j ∈ 1, ..., n) dudit modem. Ces interfaces de services ISj sont des interfaces d'accès dédiées, chacune, à un flux de service particulier. Chacune d'entre elles est identifiée par exemple par son adresse physique, @MAC_{ISj} et associée à un flux de service auquel elle est dédiée. Ces informations sont mémorisées dans un second fichier de persistance de l'équipement d'interconnexion 1 dit fichier « Interfaces de service ».

Le module de commande 11 situé en sortie du module d'analyse des trames 10, reçoit les informations concernant les terminaux utilisateur 2ₖ collectées par ledit module d'analyse de trames 10.

Ces informations concernent comme il a été dit plus haut, l'adresse physique de chacun des terminaux utilisateurs 2ₖ connectés ainsi que la nature du flux de service demandé. Le module de commande 11 reçoit également des informations concernant les adresses physiques des interfaces de terminal Iᵢ auxquelles sont respectivement connectés lesdits terminaux 2ₖ. Le module de commande 11 connaît par interrogation du fichier de persistance « Interfaces de service », la répartition des différents flux de services sur les interfaces de services IS₁ à ISₙ ainsi que les adresses physiques desdites interfaces de services IS₁ à ISₙ. Au moyen de tous ces renseignements, le module de commande 11 émet alors des instructions à destination du module d'acheminement 12.

A réception de ces instructions, le module d'acheminement 12 crée des liens entre les interfaces de services IS₁ à ISₙ et les interfaces de terminal I₁ à Iₘ correspondantes afin d'assurer l'acheminement du flux de service jusqu'aux terminaux utilisateurs 2ₖ concernés. La création de liens entre les interfaces de service ISⱼ et les interfaces de terminal Iᵢ consiste en la mise en place d'un routage ou d'un pontage entre lesdites interfaces de services ISⱼ et lesdites interfaces de terminal li.

Il existe deux méthodes différentes pour acheminer des trames de données d'une interface de service IS₁ à ISₙ vers une interface de terminal I₁ à Iₘ et au moins un terminal utilisateur 2ₖ donnés. Ces méthodes sont le routage et le pontage. La principale différence entre ces deux méthodes réside dans le fait que les ponts opèrent au niveau de la couche protocolaire dite « liaison de données » alors que les routeurs opèrent au niveau de la couche protocolaire dite « réseau ».

Le fait qu'un flux de service soit acheminé par routage ou par pontage, est le résultat d'un choix effectué par l'opérateur de télécommunications. A titre d'exemple, un opérateur peut choisir de réaliser l'acheminement du flux de service Internet au moyen d'un routeur et d'acheminer par pontage d'autres flux de services tels que la vidéo ou la visiophonie. En effet, le pontage se prête bien à l'acheminement des flux vidéo et de visiophonie car il offre un meilleur débit qu'un acheminement par routage.

La figure 2 représente un premier mode de réalisation particulier de l'invention. Dans ce mode de réalisation de l'équipement d'interconnexion 1 le module d'acheminement 12 comporte au moins un routeur 12a et au moins un pont 12b. Ainsi, des terminaux utilisateur 2ₖ aptes à recevoir des flux de services acheminés par routage et des flux de services acheminés par pontage peuvent être connectés à un unique équipement d'interconnexion 1.

Dans un deuxième mode de réalisation particulier de l'invention non représenté sur les figures, le module d'acheminement 12 comporte uniquement un routeur ou un pont.

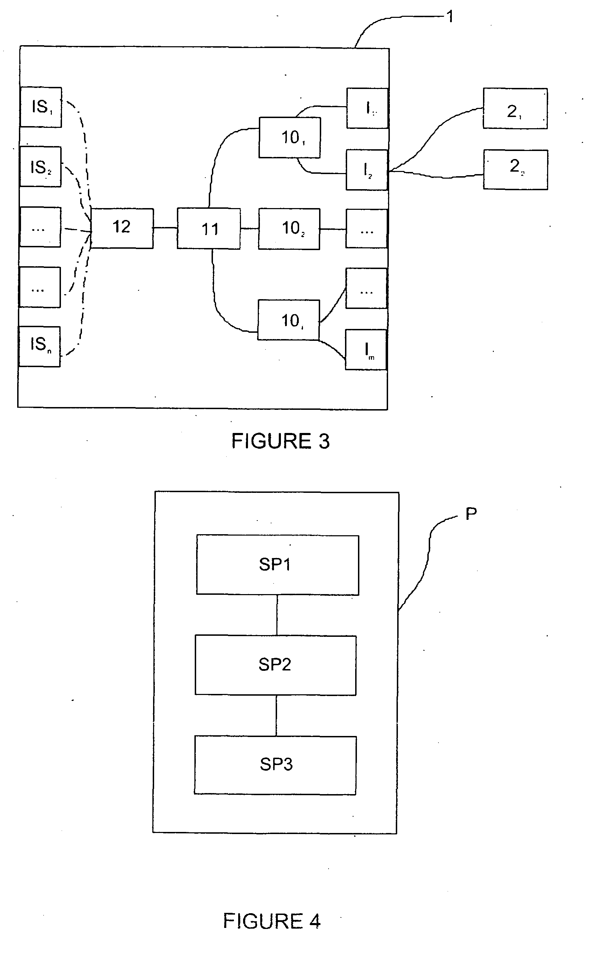

La figure 3 représente un troisième mode particulier de réalisation de la présente invention. Dans ce mode de réalisation, l'équipement d'interconnexion 1 comporte plusieurs modules d'analyse de trames 10p. Chacun de ces modules d'analyse de trames 10p intercepte les trames de données issues d'une ou plusieurs interfaces de terminal Iᵢ. Ce mode de réalisation assure un traitement plus rapide des trames de données. Ce mode de réalisation peut être combiné avec les modes de réalisation de la présente invention précédemment décrits.

La figure 4 représente l'imbrication des différents modules logiques constitutifs d'un module d'analyse de trame 10ₚ. Ces modules logiques sont au nombre de trois : un premier module logique SP1 réalisant l'initialisation de l'équipement d'interconnexion 1, un deuxième module logique SP2 assurant la détection et d'identification de tout nouveau terminal utilisateur 2ₖ connecté à l'équipement d'interconnexion 1 et un troisième module logique SP3 assurant la récupération des informations nécessaires à l'acheminement des flux de services vers les interfaces de terminal I₁ à Iₘ correspondantes.

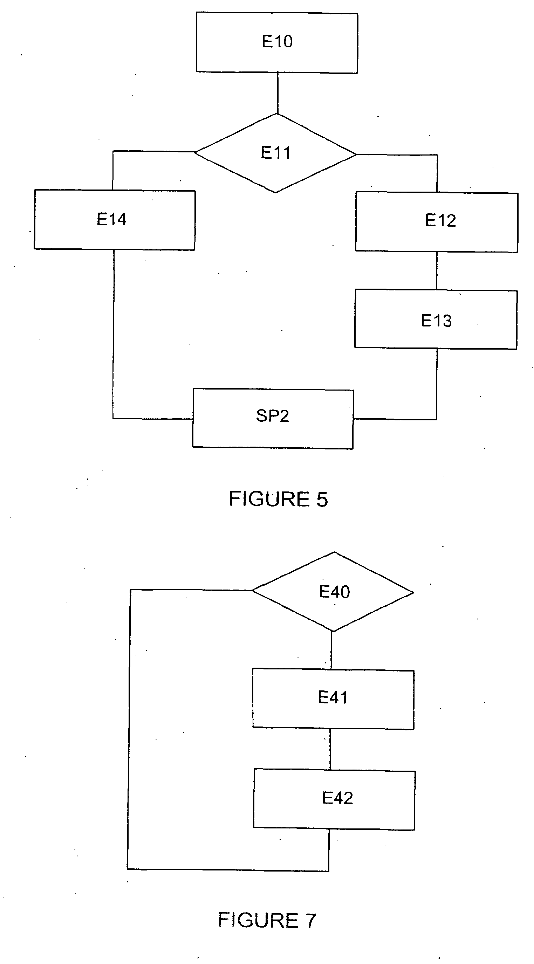

La figure 5 représente les différentes étapes constitutives du module logique d'initialisation SP1 du module d'analyse de trame 10ₚ.

Dans une première étape E10 l'équipement d'interconnexion démarre. Il s'agit alors de tester, au cours de l'étape E11 si il s'agit du premier démarrage de l'équipement d'interconnexion 1.

S'il s'agit du premier démarrage de l'équipement d'interconnexion 1, le module logique SP1 exécute l'étape E12. Dans cette étape, un service dit service par défaut est attribué à toutes les interfaces de terminal Iᵢ (i ∈ 1, ..., m). Le service par défaut est généralement le service Internet, mais peut être n'importe quel autre service.

Au cours de l'étape E13, des informations d'identification d'une interface de terminal Iᵢ (i ∈ 1, ..., m), par exemple l'adresse physique @MACₗᵢ de l'interface de terminal Iᵢ, et des informations d'identification d'un service par défaut sont mémorisés dans un troisième fichier de persistance de l'équipement d'interconnexion 1 dit fichier «Interfaces de terminal».

La définition d'un service par défaut est un choix d'implémentation avantageux dans la mesure où, il permet d'offrir ledit service par défaut à un terminal qui ne serait pas prévu pour émettre des trames permettant d'identifier un service spécifique requis par ce terminal.

Les ordinateurs personnels constituent l'exemple le plus courant de terminaux qui ne sont pas prévus pour émettre des trames permettant d'identifier le service qu'ils requièrent. Le service le plus souvent requis par un ordinateur personnel étant « Internet », il est donc avantageux de choisi « Internet » comme service par défaut.

Lorsqu'il ne s'agit pas du premier démarrage de l'équipement d'interconnexion 1, le procédé exécute l'étape E14.

Cette étape consiste à émettre, pour chaque interface de terminal Iᵢ, vers le module de commande 11 les informations d'identification du service requis par le terminal et de l'interface de terminal Iᵢ.

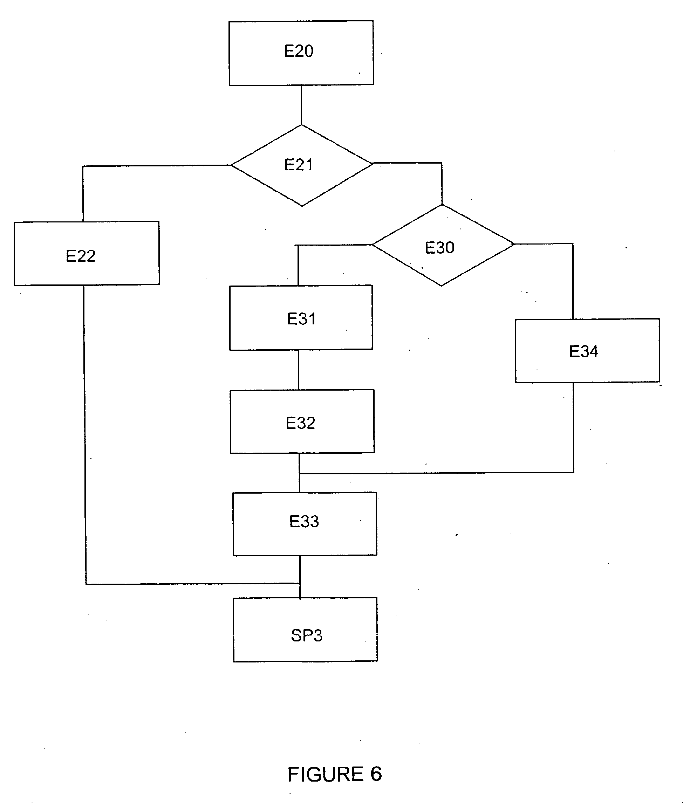

La figure 6 représente les différentes étapes constitutives du module logique SP2 de détection et d'identification de terminaux 2k connectés à l'équipement d'interconnexion 1 au moyen des interfaces vers des terminaux li (1 ∈ 1, ..., m).

Le module d'analyse de trames de données 10 reçoit, en provenance de l'un des terminaux 2ₖ connecté à l'équipement d'interconnexion 1, une trame de données à analyser. Il exécute alors les étapes E20 et E21. Dans une première étape E20, le module d'analyse de trames de données extrait l'adresse physique @MAC₂ₖ du terminal 2ₖ duquel est issue la trame de données analysée. Au cours de cette même étape, le module d'analyse de trames de données 10 reçoit en provenance du système d'exploitation de l'équipement d'interconnexion 1 l'identifiant de l'interface de terminal Iᵢ par laquelle la trame de donnés à analyser est reçue.

Au cours de l'étape E21 la valeur de l'adresse physique @MAC₂ₖ du terminal 2ₖ contenue dans la trame de données reçue est recherchée dans lez fichier de persistance « Terminaux ». Dans le cas où la valeur de l'adresse physique dudit terminal 2ₖ est présente dans le fichier de persistance « Terminaux », le procédé exécute l'étape E22.

Au cours de l'étape E22,on récupère dans le fichier de persistance « Terminaux » les informations d'identification du service stockées en association avec l'adresse physique @MAC₂ₖ du terminal 2ₖ.

Lorsque les adresses physiques ne sont pas présentes dans le fichier « Terminaux », le procédé exécute l'étape E30.

Afin d'économiser du temps de calcul sur le processeur de l'équipement d'interconnexion 1, le module d'analyse des trames 10 n'intercepte que certaines trames de données particulières. Le choix des trames de données à intercepter est le résultat de la connaissance des différents types de trames, par exemple ARP (de l'acronyme anglo-saxon *Address Resolution Protocol),* DHCP (de l'acronyme anglo-saxon *Dynamic Host Configuration Protocol),* de données pouvant être émises par les divers terminaux connectés à l'équipement d'interconnexion 1. Les trames de données devant être interceptées par le module d'analyse des trames 10 sont des trames émises peu fréquemment par les terminaux 2ₖ et dont certains des champs contiennent les informations nécessaires à l'exécution du procédé d'analyse des trames de données selon l'invention.

Ainsi lors de l'étape E30, le module d'analyse teste la nature de la trame de données interceptée par le module d'analyse des trames de données 10. Si la trame de données interceptée est une trame particulière au sens de l'invention, alors l'étape E31 sera exécutée. Si la trame interceptée n'est pas une trame particulière au sens de l'invention, le terminal 2ₖ détecté est associé, dans le fichier de persistance « Terminaux », au service par défaut, ce qui correspond à l'étape E34. Dans un mode de réalisation particulier de la présente invention, le service par défaut est un service dont le flux est acheminé par routage. Néanmoins, le service par défaut peut être un service dont le flux est acheminé au moyen d'un pont. Le choix du type d'acheminement du flux du service par défaut relève de l'opérateur en télécommunications.

Au cours de l'étape E31, les champs particuliers de la trame de données interceptée sont lus afin de récupérer les informations qu'ils contiennent. Ces informations sont, entre autres le nom du service, le numéro de série du terminal connecté, le nom de son fabricant, la version logicielle supportée par le terminal.

L'étape E32, consiste à tester la nature du flux de service demandé par ledit terminal, c'est-à-dire, à déterminer s'il s'agit d'un service dont le flux est routé ou d'un service dont le flux est acheminé par un pont.

Au cours de l'étape E33, le nom du nouveau service, ainsi que sa nature, est mémorisé dans le fichier de persistance « Interfaces de terminal» en lieu et place du nom de l'ancien service qui est le service par défaut.

Dans un mode de réalisation particulier, les trames interceptées par le module d'analyse de trames 10, au cours de l'étape E30, sont des trames DHCP. Ces trames sont des trames rarement émises par des terminaux tels que des terminaux de visiophonie ou des tuners pour télévision numérique. Dans ces trames, au moins l'un des champs 60 et 77 contient toutes les informations nécessaires à l'exécution du procédé selon l'invention.

La figure 7 représente les différentes étapes constitutives module logique SP3 de détection des informations nécessaires à l'acheminement des flux de services vers les interfaces de terminal I₁ à Iₘ correspondantes.

Au cours de l'étape E40, le service demandé par le terminal 2ₖ dont les trames ont été analysées est comparé au service mémorisé dans le fichier de persistance « Interfaces ». Si les services sont différents, le procédé exécute l'étape E41

Dans une étape E41, le service demandé par le terminal 2ₖ est mémorisé dans le fichier de persistance « Interfaces » en lieu et place du service précédemment mémorisé.

Enfin, dans une étape E42, le module d'analyse de trames 10 transmet au module de commande 11 les informations d'identification du service requis et de l'interface de terminal Iᵢ dont les trames viennent d'être analysées.. Il est à rappeler que le module de commande 11 connaît l'identifiant de l'interface de service associée à chaque service. En fonction du service demandé, le module de commande 11 réalise l'acheminement par mise en oeuvre d'u routage ou d'un pontage.

Le procédé selon l'invention permet donc de configurer automatiquement les interfaces d'un équipement d'interconnexion. Mais, ce procédé permet également, grâce à l'exploitation d'autres informations contenues dans des champs particuliers des trames de données analysées, d'offrir d'autres fonctionnalités.

Ainsi, le module d'analyse de trames de données 10 selon l'invention permet en comparant le nom du fabricant d'un terminal issu de l'analyse d'une trame de données avec les noms de fabricants mémorisés dans un fichier de persistance dit « Terminaux autorisés » accepter ou refuser la connexion dudit terminal à l'équipement d'interconnexion 1.

Il en va de même avec les versions des logiciels assurant le fonctionnement des terminaux utilisateurs 2 ou les modèles desdits terminaux. En comparant les valeurs issues de l'analyse d'une trame de données et les valeurs contenues dans le fichier de persistance «Terminaux autorisés », il est possible d'accepter ou de refuser l'utilisation d'un terminal parce que le logiciel ou le modèle de terminal ne sont pas conformes.

Bien que des modes de réalisation particuliers de la présente invention aient été décrits ci-dessus, l'homme du métier comprendra que diverses modifications et aménagements peuvent se pratiquer sans sortir du cadre de la présente invention.

## Revendications

1. Procédé de configuration automatique d'un équipement d'interconnexion (1) entre au moins une plateforme de services et au moins un terminal (2), ledit équipement d'interconnexion comportant une pluralité de premières interfaces vers ladite plateforme de service (IS₁, IS₂ ...), une première interface étant destinée à recevoir au moins un flux de données relatif à un service en provenance de la plateforme de services, et une deuxième interface (I₂) au moyen de laquelle le terminal est destiné à être connecté à l'équipement d'interconnexion, **caractérisé en ce que** le procédé comporte les étapes suivantes mises en oeuvre par l'équipement d'interconnexion:
- réception d'une trame émise par ledit terminal, ladite trame comportant des informations d'identification d'un service demandé par ledit terminal,
- identification d'une première interface de l'équipement d'interconnexion correspondant au service demandé à partir desdites informations d'identification de service,
- identification de la deuxième interface de l'équipement d'interconnexion par laquelle la dite trame est reçue,
- création d'un lien entre la première interface et la deuxième interface identifiées,
à l'issue desquelles l'équipement d'interconnexion est configuré pour acheminer le flux de données relatif au service demandé.

2. Procédé de configuration selon la revendication 1, **caractérisé en ce qu'**en l'absence de réception de ladite trame en provenance d'un terminal (2ₖ), il est considéré que le service demandé par ledit terminal (2ₖ) est un service par défaut prédéfini au niveau de l'équipement d'interconnexion.

3. Procédé de reconfiguration selon la revendication 1, **caractérisé en ce que** ladite trame est une trame DHCP.

4. Procédé de configuration selon la revendication 1, **caractérisé en ce qu'**il comporte une étape d'extraction (E31) d'informations relatives au terminal (2k) contenues dans ladite trame de données, une étape de comparaison desdites informations relatives au terminal avec d'autres informations relatives audit terminal (2k) contenues dans un fichier de persistance de l'équipement d'interconnexion (1), le lien entre la première interface èt la deuxième interface n'étant créé que si les informations relatives au terminal contenues dans le ficher de persistance sont compatibles avec les informations relatives au terminal extraites de ladite trame.

5. Equipement d'interconnexion (1) entre au moins une plateforme de services et au moins un terminal (2), ledit équipement d'interconnexion comportant une pluralité de premières interfaces (IS₁, IS₂...) vers ladite plateforme de service, une première interface étant destinée à recevoir au moins un flux de données relatif à un service en provenance de la plateforme de services et une deuxième interface (I₂) au moyen de laquelle le terminal est destiné à être connecté à l'équipement d'interconnexion, **caractérisé en ce qu'**il comporte:
- des moyens de réception d'une trame émise par ledit terminal, ladite trame comportant des informations d'identification d'un service demandé par ledit terminal,
- des moyens d'identification d'une première interface correspondant au service demandé à partir desdites informations d'identification de service,
- des moyens d'identification de la deuxième interface par laquelle la dite trame est reçue,
- des moyens de création d'un lien entre la première interface et la deuxième interface identifiées,
ces différents étant aptes à configurer l'équipement d'interconnexion pour acheminer le flux de données relatif au service demandé.

6. Equipement d'interconnexion (1) selon la revendication 5, **caractérisé en ce que** ladite trame est un trame DHCP.

7. Equipement d'interconnexion (1) selon la revendication 5, **caractérisé en ce qu'**en l'absence de réception de ladite trame en provenance d'un terminal, il est considéré que le service demandé par ledit terminal est un service par défaut prédéfini au niveau de l'équipement d'interconnexion.

8. Equipement d'interconnexion (1) selon la revendication 5, **caractérisé en ce qu'**il comporte des moyens d'extraction d'informations relatives au terminal (2k) contenues dans ladite trame de données, des moyens de comparaison desdites informations relatives au terminal avec d'autres informations relatives audit terminal (2k) contenues dans un fichier de persistance de l'équipement d'interconnexion (1), le lien entre la première interface et la deuxième interface n'étant créé que si les informations relatives au terminal contenues dans le ficher de persistance sont compatibles avec les informations relatives au terminal extraites de ladite trame.

9. Equipement d'interconnexion (1) selon la revendication 5, **caractérisé en ce que** l'équipement d'interconnexion (1) comporte au moins un routeur (12a) et au moins un pont (12b).

## Claims

1. Method of automatic configuration of an item of equipment for interconnection (1) between at least one services platform and at least one terminal (2), said item of interconnection equipment comprising a plurality of first interfaces (IS₁, IS₂, ...) to said service platform, a first interface being intended to receive at least one data stream relating to a service originating from the services platform, and a second interface (I₂) by means of which the terminal is intended to be connected to the item of interconnection equipment, **characterized in that** the method comprises the following steps implemented by the item of interconnection equipment:
- receiving a frame emitted by said terminal, said frame comprising information identifying a service requested by said terminal,
- identifying a first interface of the item of interconnection equipment corresponding to the service requested on the basis of said service identifying information,
- identifying the second interface of the item of interconnection equipment, by which said frame is received,
- creating a link between the first identified interface and the second identified interface,
on conclusion of which steps the item of interconnection equipment is configured so as to convey the data stream relating to the requested service.

2. Method of configuration according to Claim 1, **characterized in that**, in the absence of receipt of said frame originating from a terminal (2ₖ), it is considered that the service requested by said terminal (2ₖ) is a default service predefined at the level of the item of interconnection equipment.

3. Method of configuration according to Claim 1, **characterized in that** said frame is a DHCP frame.

4. Method of configuration according to Claim 1, **characterized in that** it comprises a step (E31) of extracting information relating to the terminal (2k) and contained in said data frame, a step of comparing said information relating to the terminal with other information relating to said terminal (2k) and contained in a persistence file of the item of interconnection equipment (1), the link between the first interface and the second interface being created only if the terminal-related information contained in the persistence file is compatible with the terminal-related information extracted from said frame.

5. Item of equipment for interconnection (1) between at least one services platform and at least one terminal (2), said item of interconnection equipment comprising a plurality of first interfaces (IS₁, IS₂, ...) to said service platform, a first interface being intended to receive at least one data stream relating to a service originating from the services platform and a second interface (I₂) by means of which the terminal is intended to be connected to the item of interconnection equipment, **characterized in that** it comprises:
- means for receiving a frame emitted by said terminal, said frame comprising information identifying a service requested by said terminal,
- means for identifying a first interface corresponding to the service requested on the basis of said service identifying information,
- means for identifying the second interface by which said frame is received,
- means for creating a link between the first identified interface and the second identified interface,
these various means being able to configure the interconnection equipment so as to convey the data stream relating to the requested service.

6. Item of interconnection equipment (1) according to Claim 5, **characterized in that** said frame is a DHCP frame.

7. Item of interconnection equipment (1) according to Claim 5, **characterized in that**, in the absence of receipt of said frame originating from a terminal, it is considered that the service requested by said terminal is a default service predefined at the level of the item of interconnection equipment.

8. Item of interconnection equipment (1) according to Claim 5, **characterized in that** it comprises means for extracting information relating to the terminal (2k) and contained in said data frame, means for comparing said information relating to the terminal with other information relating to said terminal (2k) and contained in a persistence file of the item of interconnection equipment (1), the link between the first interface and the second interface being created only if the terminal-related information contained in the persistence file is compatible with the terminal-related information extracted from said frame.

9. Item of interconnection equipment (1) according to Claim 5, **characterized in that** the item of interconnection equipment (1) comprises at least one router (12a) and at least one bridge (12b).

## Patentansprüche

1. Verfahren zum automatischen Konfigurieren einer Verbindungsanlage (1) zwischen wenigstens einer Dienstplattform und wenigstens einem Endgerät (2), wobei die Verbindungsanlage mehrere erste Schnittstellen (IS₁, IS₂, ...) zu der Dienstplattform umfasst, wobei eine erste Schnittstelle dazu bestimmt ist, wenigstens einen Datenfluss zu empfangen, der auf einen von der Dienstplattform kommenden Dienst bezogen ist, und eine zweite Schnittstelle (I₂) umfasst, mittels derer das Endgerät mit der Verbindungsanlage verbunden werden soll, **dadurch gekennzeichnet, dass** das Verfahren die folgenden Schritte umfasst, die durch die Verbindungsanlage ausgeführt werden:
- Empfangen eines von dem Endgerät ausgesendeten Rahmens, wobei der Rahmen Informationen zur Identifizierung eines von dem Endgerät angeforderten Diensts enthält,
- Identifizieren einer ersten Schnittstelle der Verbindungsanlage, die dem angeforderten Dienst entspricht, anhand der Dienstidentifizierungsinformationen,
- Identifizieren der zweiten Schnittstelle der Verbindungsanlage, von der der Rahmen empfangen wird,
- Erzeugen einer Verbindung zwischen der ersten Schnittstelle und der zweite Schnittstelle, die identifiziert worden sind,
wobei nach deren Abschluss die Verbindungsanlage konfiguriert ist, um den auf den angeforderten Dienst bezogenen Datenfluss zu leiten.

2. Konfigurationsverfahren nach Anspruch 1, **dadurch gekennzeichnet, dass** bei Abwesenheit des Empfangs des von einem Endgerät (2ₖ) stammenden Rahmens davon ausgegangen wird, dass der von dem Endgerät (2ₖ) angeforderte Dienst ein voreingestellter Dienst ist, der auf Höhe der Verbindungsanlage im Voraus definiert wird.

3. Konfigurationsverfahren nach Anspruch 1, **dadurch gekennzeichnet, dass** der Rahmen ein DHCP-Rahmen ist.

4. Konfigurationsverfahren nach Anspruch 1, **dadurch gekennzeichnet, dass** es einen Schritt (E31) zum Extrahieren von Informationen, die auf das Endgerät (2k) bezogen sind und in dem Datenrahmen enthalten sind, und einen Schritt zum Vergleichen dieser auf das Endgerät bezogenen Informationen mit anderen Informationen, die auf das Endgerät (2k) bezogen sind und in einer residenten Datei der Verbindungsanlage (1) enthalten sind, umfasst, wobei die Verbindung zwischen der ersten Schnittstelle und der zweiten Schnittstelle nur erzeugt wird, falls die auf das in der residenten Datei enthaltenen, auf das Endgerät bezogenen Informationen mit den auf das Endgerät bezogenen Informationen, die aus dem Rahmen extrahiert werden, kompatibel sind.

5. Verbindungsanlage (1) zwischen wenigstens einer Dienstplattform und wenigstens einem Endgerät (2), wobei die Verbindungsanlage mehrere erste Schnittstellen (IS₁, IS₂, ...) zu der Dienstplattform umfasst, wobei eine erste Schnittstelle dazu bestimmt ist, wenigstens einen Datenfluss zu empfangen, der auf einen von der Dienstplattform kommenden Dienst bezogen ist, und eine zweite Schnittstelle (I₂) umfasst, mittels derer das Endgerät mit der Verbindungsanlage verbunden werden soll, **dadurch gekennzeichnet, dass** sie Folgendes umfasst:
- Mittel zum Empfangen eines von dem Endgerät ausgesendeten Rahmens, wobei der Rahmen Informationen zum Identifizieren eines von dem Endgerät angeforderten Diensts enthält,
- Mittel zum Identifizieren einer ersten Schnittstelle, die dem angeforderten Dienst entspricht, anhand der Dienstidentifizierungsinformationen,
- Mittel zum Identifizieren der zweiten Schnittstelle, von der der Rahmen empfangen wird,
- Mittel zum Erzeugen einer Verbindung zwischen der ersten Schnittstelle und der zweiten Schnittstelle, die identifiziert worden sind,
wobei diese verschiedenen Mittel die Verbindungsanlage konfigurieren können, um den auf den angeforderten Dienst bezogenen Datenfluss zu leiten.

6. Verbindungsanlage (1) nach Anspruch 5, **dadurch gekennzeichnet, dass** der Rahmen ein DHCP-Rahmen ist.

7. Verbindungsanlage (1) nach Anspruch 5, **dadurch gekennzeichnet, dass** bei Abwesenheit des Empfangs des Rahmens von einem Endgerät davon ausgegangen wird, dass der von dem Endgerät angeforderte Dienst ein voreingestellter Dienst ist, der auf Höhe der Verbindungsanlage im Voraus definiert wird.

8. Verbindungsanlage (1) nach Anspruch 5, **dadurch gekennzeichnet, dass** sie Mittel zum Extrahieren von auf das Endgerät (2k) bezogenen Informationen, die in dem Datenrahmen enthalten sind, und Mittel zum Vergleichen dieser auf das Endgerät bezogenen Informationen mit anderen auf das Endgerät (2k) bezogenen Informationen, die in einer residenten Datei in der Verbindungsanlage (1) enthalten sind, umfasst, wobei die Verbindung zwischen der ersten Schnittstelle und der zweiten Schnittstelle nur erzeugt wird, wenn die auf das Endgerät bezogenen Informationen, die in der residenten Datei enthalten sind, mit den auf das Endgerät bezogenen Informationen, die aus dem Rahmen extrahiert werden, kompatibel sind.

9. Verbindungsanlage (1) nach Anspruch 5, **dadurch gekennzeichnet, dass** die Verbindungsanlage (1) wenigstens einen Router (12a) und wenigstens eine Brücke (12b) umfasst.
